# EUROPEAN PATENT APPLICATION

(11) **EP 1 767 548 A1**
(43) Date of publication of application: **28.03.2007**
(21) Application number: 05762388.6
(22) Date of filing: 04.07.2005
(51) Int. Cl.: C08F 4/64, C08F 10/00

(54) **SPHERICAL CATALYST COMPONENT FOR OLEFIN POLYMERIZATION REACTION AND CATALYST THEREOF**

(30) Priority: 05.07.2004 CN 200410062291
(71) Applicant: China Petroleum & Chemical Corporation, Beijing 100029 (CN); Beijing Research Institute of Chemical Industry, China Petroleum &Chemical Corporation, Beijing 100013 (CN)
(72) Inventor: YANG, Yuanyi, Beijing 100013 (CN); DU, Hongbin, Beijing 100013 (CN); LI, Zhenhu, Beijing 100013 (CN); WANG, Zhiwu, Beijing 100013 (CN); TAN, Zhong, Beijing 100013 (CN); ZHANG, Kai, Beijing 100013 (CN); XIA, Xianzhi, Beijing 100013 (CN); LI, Tianyi, Beijing 100013 (CN); WANG, Xinsheng, Beijing 100013 (CN); ZHANG, Tianyi, Beijing 100013 (CN); CHEN, Wei, Beijing 100013 (CN); ZHENG, Xuan, Beijing 100013 (CN)
(74) Representative: Walcher, Armin
(86) International application number: PCT/CN2005/000965
(87) International publication number: WO 2006/005247

(57) **Abstract**

The present invention provides a spheric catalyst component as well as a catalyst for olefin polymerization. The spheric catalyst component comprises at least one titanium compound and optionally at least one electron donor compound supported on an active magnesium halide spheric carrier, wherein the active magnesium halide spheric carrier is solid particles obtained by dispersing a melt of a magnesium halide/alcohol adduct by rotation under high-gravity field. The catalyst has good particle morphology and narrow particle size distribution, and when used in olefin polymerization, especially in propylene polymerization, exhibits relatively high activity and stereoelectivity, and gives polymers having good particle morphology and high bulk density.

## Description

### CROSS REFERENCE OF RELATED APPLICATION

The present application claims priority CN200410062291.3, filed on July 5, 2004, which is incorporated herein by reference in its entirety and for all purposes.

### TECHNICAL FIELD OF THE INVENTION

The present invention relates to a spheric catalyst component for olefin polymerization, a catalyst comprising the same, and its use in the polymerization of alpha olefin monomer, CH₂=CHR, in which R is H or C₁-C₁₂ alkyl or aryl, or a mixture of said alpha olefin monomer with comonomer(s). More specifically, the present invention relates to a spheric catalyst component prepared from magnesium halide/alcohol adduct particles which are prepared using high-gravity rotary bed technique, to a catalyst comprising the spheric catalyst component, and to use of the catalyst in the polymerization of alpha olefin monomer, CH₂=CHR, in which R is H or C₁-C₁₂ alkyl or aryl, or a mixture of said alpha olefin monomer with comonomer(s).

### BACKGROUND OF THE INVENTION

Use of magnesium dichloride/alcohol adduct particles as carrier in the preparation of catalysts for olefin polymerization, in particular for propylene polymerization, are well known in the art. In the known catalyst systems, the particles of magnesium dichloride/alcohol adduct are prepared through spray drying process, spray cooling process, high-pressure extruding process, high-speed stirring process, etc.

WO 8707620, WO 9311166, US 5,100,849, US 5,468,698 and US 6,020,279 disclose processes for preparing catalysts for olefin polymerization, wherein magnesium dichloride/alcohol adduct is generally prepared by a spray cooling process, comprising spray cooling a melt of magnesium dichloride/alcohol adduct having a molar ratio of alcohol to magnesium dichloride of from 3 to 6, to obtain spheric particles of magnesium dichloride/alcohol adduct. The drawbacks of said processes lie in the complexity of control of process conditions. In addition, the prepared catalysts have a larger particle size and a lower catalytic activity.

U.S. Patent 4,469,648 discloses a method for preparing spheric catalyst for olefin polymerization, wherein particles of magnesium dichloride/alcohol adduct used in the preparation of the catalyst are prepared by high-pressure extruding process, said process using kerosene, liquid paraffin, while oil etc. having a low viscosity as reaction medium, and comprising the steps of heating the reaction system to a temperature of 120-130°C and holding for a period of time; charging high-purity nitrogen gas into the reactor so that the pressure in the reactor reaches 10-15atm; discharging the mixture of the melt of magnesium dichloride/alcohol adduct and the reaction medium, through an outlet pipe having a length of 3-10m and an inner diameter of 1-2mm, into a cooling medium, wherein the flow speed of the mixture in the pipe is about 4-7 m/s; collecting, washing and drying the formed, cooled solid particles to obtain the particles of magnesium dichloride/alcohol adduct. The process applies relatively high requirements to the apparatus, and the morphology of the obtained particles of magnesium dichloride/alcohol adduct is not good so that the particle morphology of the finally prepared catalyst is not good. As a result, the resultant powdery polymer has poor particle morphology and a low bulk density.

US 4,399,054, EP 0,395,383, US 6,127,304 and US 6,323,152 disclose catalysts for olefin polymerization, wherein particles of magnesium dichloride/alcohol adduct used therein are prepared by a high-speed stirring process, comprising dispersing a molten magnesium dichloride/alcohol adduct in form of droplets into an inert medium having a certain viscosity by high-speed stirring, then discharging the mixture at a certain flow speed into a cooling medium, which is pre-cooled to lower temperature, under stirring to solidify the melt by cooling, thereby obtaining spheric particles of magnesium dichloride/alcohol adduct. This process is simple, but still suffers from relatively large particle size and broad particle size distribution of the magnesium dichloride/alcohol adduct, as well as unsatisfied activity of the final catalyst.

The inventors have surprisingly found that a catalyst component as well as a catalyst for olefin polymerization, which has good particle morphology and narrow particle size distribution, and when used in olefin polymerization, especially in propylene polymerization, exhibits relatively high activity and gives polymers having good particle morphology and high bulk density, could be obtained by preparing particles of magnesium dichloride/alcohol adduct through a novel process, and then contacting the particles of magnesium dichloride/alcohol adduct with a transition metal compound.

### SUMMARY OF THE INVENTION

One object of the present invention is to provide a spheric catalyst component for olefin polymerization comprising at least one titanium compound and optionally at least one electron donor compound supported on an active magnesium halide spheric carrier, wherein the active magnesium halide spheric carrier is solid particles obtained by dispersing a melt of a magnesium halide/alcohol adduct by rotation under high-gravity field.

Another object of the present invention is to provide a spheric catalyst component for olefin polymerization, which comprises at least one titanium compound and optionally at least one electron donor compound supported on an active magnesium halide spheric carrier, and when used in olefin polymerization, gives a powder polymer having a bulk density of greater than or equal to 0.48 g/cm³.

Still another object of the present invention is to provide a catalyst for the polymerization of olefin CH₂=CHR, in which R is H or C₁-C₁₂ alkyl or aryl, said catalyst comprising a reaction product of:
a) the spheric catalyst component according to the present invention;
b) an alkyl aluminum compound; and
c) optionally, an external electron donor compound.

Still another object of the present invention is to provide a process for polymerizing olefin CH₂=CHR, in which R is H or C₁-C₁₂ alkyl or aryl, comprising contacting the olefin and optional comonomer(s) with the catalyst according to the present invention under polymerization conditions.

### BRIEF DESCRIPTION OF THE DRAWINGS

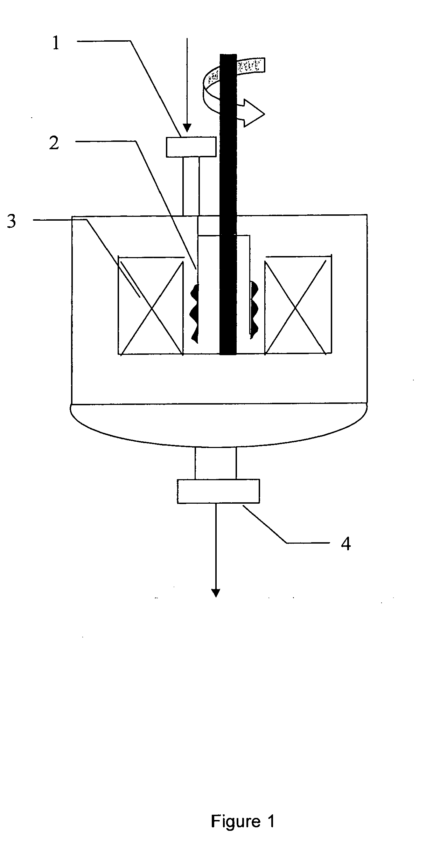

Figure 1 is a schematic diagram of a high-gravity rotary bed useful in an embodiment of the present invention.

### DETAILED DESCRIPTION OF THE INVENTION

The term "polymerization" as used herein intends to include homopolymerization and copolymerization. The term "polymer" as used herein intends to include homopolymer, copolymer and terpolymer.

The term "catalyst component" as used herein intends to mean main catalyst component or pre-catalyst, which, together with cocatalyst component and optional external ED compound, forms catalyst for olefin polymerization.

In an aspect, the present invention provides a spheric catalyst component for olefin polymerization comprising at least one titanium compound and optionally at least one electron donor compound supported on an active magnesium halide carrier, which active magnesium halide carrier is solid particles obtained by dispersing a melt of a magnesium halide/alcohol adduct by rotation under high-gravity field.

The active magnesium halide carrier has a mean particle size (D50) ranging from 10 to 150 µm, preferably from 15 to 90 µm, and a particle size distribution index, expressed by the ratio of (D90-D10)/D50 of less than or equal to 1.5, preferably less than or equal to 1.3.

Preferably, said active magnesium halide carrier is prepared through a process comprising the steps of:
(i) in an inert liquid medium, contacting a magnesium halide with an alcohol to prepare a melt of a magnesium halide/alcohol adduct;
(ii) dispersing the mixture of the inert liquid medium and the melt of the magnesium halide/alcohol adduct prepared in step (i) by high speed rotation under high-gravity field to obtain a dispersion of the melt of the magnesium halide/alcohol adduct; and
(iii) cooling the dispersion of the melt prepared in step (ii) to form particles of the magnesium halide/alcohol adduct.

In this process, the magnesium halide contacts and reacts with the alcohol generally in a reactor with a stirrer. Suitable magnesium halides are represented by a formula of Mg(OR¹)₂₋ₘXₘ, in which R¹ is a C₁-C₁₄ hydrocarbyl, preferably a linear, branched or cyclic alkyl, X is selected from the group consisting of F, Cl, Br and mixtures thereof, and m is 1 or 2. Examples of magnesium halides include, but are not limited to, magnesium dichloride, magnesium dibromide, phenoxymagnesium chloride, isopropoxymagnesium chloride, butoxymagnesium chloride, with magnesium dichloride being preferred. These magnesium halides can be used either alone or in combination.

Suitable alcohols are represented by a formula of R²OH, in which R² is an alkyl, cycloalkyl or aryl, having from 1 to 12 carbon atoms. These alcohols can be used either alone or in combination. The preferred alcohols include methanol, ethanol, propanol, iso-propanol, n-butanol, iso-butanol, iso-pentanol, 2-ethylhexanol, ethylene glycol, propylene glycol, chloroethanol, trichloroethanol, and mixtures thereof.

In general, the alcohols are used in such an amount that the obtained adduct is in solid state at room temperature but in liquid state at an elevated temperature, for example, at 90 to 150 °C. The molar ratio of the alcohol to the magnesium halide generally varies depending on the type of the alcohol and the type of the magnesium halide. For instance, when methanol, ethanol, propanol, or butanol is used as the alcohol compound, and magnesium dichloride is used as the magnesium halide, the molar ratio of the alcohol to magnesium dichloride may be in a range of from 2 to 6, preferably from 2.5 to 4. A molar ratio in said ranges results in that the obtained adduct is in solid state at room temperature, but in molten state at an elevated temperature, for example, at 100 to 135°C.

The magnesium halide contacts and reacts with the alcohol under heating conditions. The final reaction temperature should be high enough to melt the magnesium halide/alcohol adduct. Said final reaction temperature is typically in a range of from 90 to 150 °C, preferably from 110 to 140°C, and more preferably from 120 to 130°C.

The inert liquid medium can be any liquid which is immiscible with the molten adduct and chemically inert, and is typically liquid aliphatic hydrocarbon inert solvent, such as kerosene, liquid paraffin, vaseline oil, white oil, etc., and if necessary, optionally comprises some organic silicon compounds or surfactants. The preferred inert liquid medium is white oil or a mixture of white oil and silicone oil in the present invention.

More specifically, in the process for preparing active magnesium carrier useful in the catalyst component according to the present invention, the mixture of the magnesium halide/alcohol adduct melt and the inert liquid medium is rotated at high speed under high-gravity field so that the adduct melt is dispersed to form uniform liquid droplets. The process mainly makes use of the characteristic of greatly intensified mass transfer between reactants under high-gravity field. The high-gravity field can be generated by a high-gravity rotary device. In an embodiment, the mixture of the inert liquid medium and the magnesium halide/alcohol adduct melt prepared in said step (i) can be dispersed by high-speed rotation in a high-gravity rotary bed. The basic structure of a high-gravity rotary bed is shown in Figure 1, and the related, more detailed contents can be found in the Chinese Patent Application CN1428189A, "Medium- or High-pressure Rotary Bed Gas-liquid Mass-transferring and Reaction Equipment", which is incorporated herein by reference in its entirety. Reference can also be made on the Chinese Patent Application CN 03153152:0, "Magnesium Halide/Alcohol Adduct, its Preparation and Use", which is incorporated herein by reference in its entirety.

With reference to Figure 1, the mixture of the inert liquid medium and the magnesium halide/alcohol adduct melt enters the high-gravity rotary bed via an inlet 1, and is uniformly sprayed via a static liquid distributor 2, which is located at the center of the rotator, onto the inside edge of the packing 3 rotating at a high speed. The feed stream is sheared by the packing 3 that rotates at a high speed to form fine liquid droplets, and the micro-mixing of the adduct and the inert liquid medium is intensified so that the magnesium halide/alcohol adduct melt is uniformly dispersed in the inert liquid medium in a form of liquid droplets. The stuff is then thrown out by the packing 3 that rotates at a high speed and discharged via an outlet 4, to give an uniform dispersion of the magnesium halide/alcohol adduct melt.

The packing in the high-gravity rotary bed can be a corrugated gauze packing having an average pore size of from 0.1 to 8mm, a porosity of from 90 to 99 percent, a specific surface area of from 100 to 3000 m²/m³, and a wire diameter of from 0.05 to 0.5 mm.

The rotation speed of the high-gravity rotary bed is typically in a range of from 100 to 3000 rpm, preferably from 150 to 2500 rpm, most preferably from 500 to 2000 rpm. The dispersion effect can be readily adjusted by regulating the rotation speed.

The dispersion of the melt obtained from the high-gravity rotary bed is cooled in order to obtain the particles of the magnesium halide/alcohol adduct useful in the present invention. In general, the stream discharged from the outlet 4 of the high-gravity rotary bed can be introduced into a cooling liquid-containing vessel equipped with a stirrer, to rapidly cool and shape the magnesium halide/alcohol adduct to obtain spheric solid particles. In general, the mean particle size (D50) of said solid particles is in a range of from 10 to 150 µm, preferably from 15 to 90 µm. The mean particle size (D50) of the obtained spheric solid particles can be regulated by altering the rotation speed of the high-gravity rotary bed, the wire diameter of the packing, the average pore size of the packing, the thickness of the packing bed, the diameter of the rotary bed, etc.

Said cooling liquid can be inert hydrocarbon compound with a lower boiling point, such as petroleum ether, raffinate oil, pentane, hexane, heptane, and the like. Prior to contacting with the stuff, the cooling liquid can be controlled at a temperature of from -20 to -40°C.

Finally, the cooled spheric solid particles are filtered out, washed with a washing liquid, and then dried to obtain the product of particles of the magnesium halide/alcohol adduct.

Said washing liquid can be inert hydrocarbon compound with a lower boiling point, such as petroleum ether, raffinate oil, pentane, hexane, heptane, and the like. The washing can be carried out at ambient temperature.

The mean particle size and particle size distribution of said solid particles can be measured by a laser granulometer. The particle size distribution index is defined as the ratio of (D90-D10)/D50. In the present invention, said ratio is preferably less than or equal to 1.5. A useful laser granulometer is APA5002, manufactured by Malvern Instruments Ltd., Malvern, UK.

The molar ratio of the alcohol to the magnesium halide in the adduct can be measured by thermogravimetry. One useful thermogravimeter is PE-7, manufactured by PE Corp., USA.

The catalyst component for olefin polymerization, especially for propylene polymerization, according to the present invention can be obtained by reacting the above-described active magnesium halide carrier with at least one transition metal compound and optionally at least one electron donor compound. The catalyst according to the present invention can be further obtained.

It is surprising that the catalysts prepared from the magnesium halide carrier, which is prepared by the process described above and has a smaller mean particle size and a narrower particle size distribution, exhibit higher polymerization activity and higher stereoelectivity, and give a polymer having better morphology and higher bulk density, compared with the catalysts prepared from a magnesium dichloride/alcohol adduct which is prepared by a technique known in the art.

The spheric catalyst component for olefin polymerization according to the present invention comprises at least one titanium compound and optionally at least one electron donor compound supported on the active magnesium halide carrier.

Said titanium compound is preferably one represented by a formula of Ti(OR³)ₙXₘ, in which R³(s) is/are independently a hydrocarbyl having from 1 to 20 carbon atoms, preferably an alkyl having from 1 to 20 carbon atoms; X(s) is/are a halogen, independently selected from the group consisting of F, Cl, Br, I, and mixtures thereof; n is an integer of from 0 to 4, m is an integer of from 0 to 4, and the sum of n and m is 3 or 4. Examples include titanium tetrachloride, titanium tetrabromide, titanium tetraiodide, tetrabutoxy titanium, tetraethoxy titanium, tributoxy titanium chloride, dibutoxy titanium dichloride, butoxy titanium trichloride, triethoxy titanium chloride, diethoxy titanium dichloride, ethoxy titanium trichloride, titanium trichloride, and mixtures thereof, with titanium tetrachloride being preferred.

The supporting of the titanium compound can be performed through any method known in the art. In a preferred embodiment, the supporting of the titanium compound is conducted by suspending the adduct in cool liquid titanium tetrachloride or a mixture of titanium tetrachloride and an inert solvent at a temperature of generally from -30 to 0 °C, preferably from -20 to -10 °C; then heating the mixture to a temperature of from 40 to 130 °C, preferably from 60 to 120 °C and maintaining at said temperature for 0.5 to 2 hours; and then recovering solid component by filtering off the liquid component. Such titanium tetrachloride treatment can be carried out for one or more times, preferably for two, three, or four times. The inert solvent is preferably aliphatic hydrocarbon or aromatic hydrocarbon, for example, hexane, heptane, octane, decane, toluene, and the like.

Before, during, or after the reaction of the magnesium halide/alcohol adduct according to the present invention with the titanium compound(s), at least one internal electron donor compound can be used to treat the adduct, and this treatment can also be repeated one or more times. In particular, for a catalyst component for propylene polymerization, this internal electron donor compound treatment is indispensable for obtaining a polypropylene having a higher isotacticity.

Use of an internal electron-donor compound in catalysts for, for example, propylene polymerization is well known in the art, and all commonly used internal electron-donor compounds can be used in the present invention. Suitable internal electron-donor compounds include esters, ethers, ketones, amines, silanes, etc. The preferred include aliphatic or aromatic, monobasic or polybasic carboxylic acid ester compounds, such as benzoates, phthalates, malonates, succinates, glutarates, adipates, pivalates, sebacates, maleates, naphthalene dicarboxylates, trimellitates, benzene-1,2,3-tricarboxylic acid esters, pyromellitates and carbonates. Examples include ethyl benzoate, diethyl phthalate, diisobutyl phthalate, di-n-butyl phthalate, diisooctyl phthalate, di-n-octyl phthalate, diethyl malonate, dibutyl malonate, diethyl 2,3-diisopropylsuccinate, diisobutyl 2,3-diisopropylsuccinate, di-n-butyl 2,3-diisopropylsuccinate, dimethyl 2,3-diisopropylsuccinate, diisobutyl 2,2-dimethylsuccinate, diisobutyl 2-ethyl-2-methylsuccinate, diethyl 2-ethyl-2-methylsuccinate, diethyl adipate, dibutyl adipate, diethyl sebacate, dibutyl sebacate, diethyl maleate, di-n-butyl maleate, diethyl naphthalene dicarboxylate, dibutyl naphthalene dicarboxylate, triethyl trimellitate, tributyl trimellitate, benzene-1,2,3-tricarboxylic acid triethyl ester, benzene-1,2,3-tricarboxylic acid tributyl ester, tetraethyl pyromellitate, tetrabutyl pyromellitate, etc.

Another preferred class of internal electron donor compounds is diether compounds, preferably 1,3-diether represented by the general formula (I), 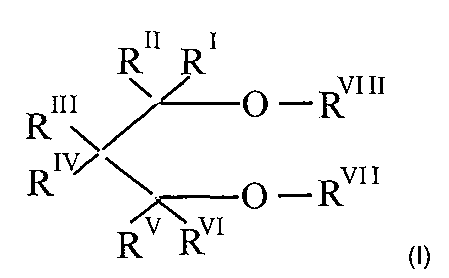 wherein R^{I}, R^{II}, R^{III}, R^{IV}, R^{V} and R^{VI}, which are identical or different, are selected from the group consisting of hydrogen, halogen, linear and branched C₁-C₂₀ alkyl, C₃-C₂₀ cycloalkyl, C₆-C₂₀ aryl, C₇-C₂₀ alkylaryl and C₇-C₂₀ arylalkyl, and R^{VII} and R^{VIII}, which are identical or different, are selected from the group consisting of linear and branched C₁-C₂₀ alkyl, C₃-C₂₀ cycloalkyl, C₆-C₂₀ aryl, C₇-C₂₀ alkylaryl and C₇-C₂₀ arylalkyl; and groups R^{I} to R^{VI} may link to each other to form a ring. The preferred are those 1,3-diethers wherein R^{VII} and R^{VIII} are independently a C₁-C₄ alkyl.

Suitable internal electron donor compounds further include polyol esters of the general formula (II), as described in Chinese Patent Application No. CN1436766, 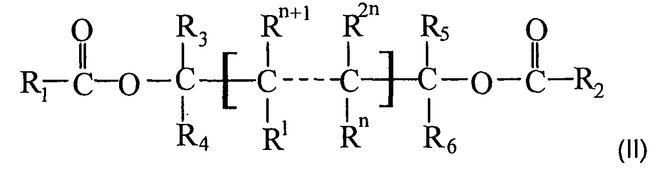 wherein R₁ to R₆ and R¹ to R²ⁿ, which are identical or different, are hydrogen, halogen, or optionally substituted linear or branched C₁-C₂₀ alkyl, C₃-C₂₀ cycloalkyl, C₆-C₂₀ mono-ring or multi-ring aryl, C₇-C₂₀ alkylaryl, C₇-C₂₀ arylalkyl, C₂-C₁₀ alkenyl, or C₂-C₁₀ ester group, with the proviso that R₁ and R₂ are not hydrogen; R₃ to R₆ and R¹ to R²ⁿ optionally comprise one or more heteroatoms, which are selected from the group consisting of nitrogen, oxygen, sulfur, silicon, phosphorus and halogen, replacing carbon or hydrogen or the both; and one or more of R₃ to R₆ and R¹ to R²ⁿ may be linked to form a ring; and n is an integer ranging from 0 to 10.

Among said polyol ester compounds, compounds of the general formula (III) or the general formula (IV), 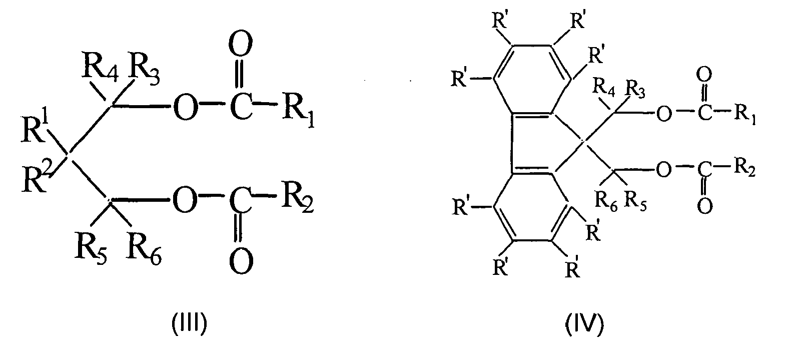 wherein R₁ to R₆ and R¹ to R² are as defined in the general formula (II), and R's are identical or different, and are hydrogen, halogen, linear or branched C₁-C₂₀ alkyl, C₃-C₂₀ cycloalkyl, C₆-C₂₀ aryl, C₇-C₂₀ alkylaryl, or C₇-C₂₀ arylalkyl, are preferred.

The catalyst components according to the present invention have a specific surface area of greater than or equal to 200 m²/g, preferably greater than or equal to 250 m²/g, and a pore volume of greater than or equal to 0.25 ml/g, preferably greater than or equal to 0.28 ml/g.

The specific surface area as well as the pore volume of the catalyst component can be measured by adsorption-desorption method. One useful adsorption-desorption measurement apparatus is ASAP 2010N, manufactured by MICROMERITICS Corp., USA.

In another aspect, the present invention provides a catalyst for the polymerization of olefin, said catalyst comprising a reaction product of:
a) the spheric catalyst component according to the present invention (i.e., titanium-containing active component);
b) an alkyl aluminum compound component represented by formula AIR⁴ₙX₃₋ₙ, wherein R⁴(s) is/are independently a C₁-C₂₀ linear, branched or cyclic alkyl, X(s) is/are independently a halogen, and n = 1, 2 or 3, with triethyl aluminum, triisobutyl aluminum, tri-n-butyl aluminum, tri-n-hexyl aluminum, Al(n-C₈H₁₇)₃, alkyl aluminum chloride, such as AlEt₂Cl, etc. being preferred, and said alkylaluminum compounds being used alone or in combination and in an amount such that molar ratio of Al/Ti is in a range of from 1 to 1000; and
c) optionally, an external electron-donor compound, such as mono- or multi-functional carboxylic acids, anhydrides, esters, ketones, ethers, alcohols, and lactones; organo phosphorous compounds, and organic silicon compounds, with organic silicon compounds being preferred, and said external electron-donor compound being used in an amount of from 0.005 to 0.5 moles, preferably from 0.01 to 0.25 moles, with respect to per mole of the alkyl aluminum compound.

Use of an external electron-donor compound in catalysts for olefin polymerization is well known by those skilled in the art. As external electron-donor, a silicon compound having at least one Si-OR bond of formula R⁵ₐR⁶_{b}Si(OR⁷)_{c}, in which a and b are independently an integer of from 0 to 2, c is an integer of from 1 to 3, and the sum of a+b+c is 4; R⁵, R⁶, and R⁷ are independently a C₁-C₁₈ hydrocarbyl optionally containing hetero-atom(s), is preferred. A silicon compound of the above formula, wherein a is 1, b is 1, and c is 2, at least one of R⁵ and R⁶ is selected from the group consisting of branched alkyl, alkenyl, alkylene, cycloalkyl and aryl group, having 3 to 10 carbon atoms, optionally containing hetero-atoms, and R⁷ is a C₁-C₁₀ alkyl group, especially methyl, is especially preferred. Examples of preferred silicon compounds include, but not limited to, cyclohexyl methyl dimethoxy silane, diisopropyl dimethoxy silane, di-n-butyl dimethoxy silane, diisobutyl dimethoxy silane, diphenyl dimethoxy silane, methyl tert-butyl dimethoxy silane, dicyclopentyl dimethoxy silane, 2-ethylpiperidyl tert-butyl dimethoxy silane, 1,1,1-trifluoropropan-2-yl 2-ethylpiperidyl dimethoxy silane, and 1,1,1-trifluoropropan-2-yl methyl dimethoxy silane.

In addition, preferred silicon compounds include silicon compounds of the above formula, wherein a is 0, b is 1, c is 3, R⁶ is a branched alkyl or cycloalkyl group, optionally containing hetero-atom(s), and R⁷ is methyl group. Examples of such silicon compounds include cyclohexyl trimethoxy silane, tert-butyl trimethoxy silane, and tert-hexyl trimethoxy silane.

Additionally, 1,3-diether compounds of the above formula (I) can be selected as the external electron-donor. Among said 1,3-diether compounds, 2-isopentyl-2-isopropyl-1,3-dimethoxy-propane and 9,9-di(methoxymethyl)fluorene are preferred.

The alkyl aluminum compound component b) and the optional external electron-donor compound component c) can contact and react with the active component a) separately or as a mixture.

The catalyst according to the invention is suitable to catalyze the polymerization of olefin CH₂=CHR, in which R is H or a C₁-C₁₂ alkyl or aryl, or a mixture of said olefin and comonomer(s), such as other alpha olefins, and if desired, a minor amount of a diene. This constitutes another subject matter of the invention.

The polymerization of olefin(s) is carried out in liquid phase of liquid monomer(s) or a solution of monomer(s) in an inert solvent, or in gas phase, or in a combination of gas phase and liquid phase, according the known processes. The polymerization is generally carried out at a temperature of from 0°C to 150°C, preferably from 60°C to 100°C, and at normal or higher pressure.

### EXAMPLES

The following examples are provided to illustrate the present invention, and are not to limit the scope of the invention in any way.

### General procedure for preparing a spheric catalyst component:

To a 350ml glass reactor equipped with a stirrer were charged with 50 ml of hexane and 50 ml of TiCl₄, and the content was cooled to -20 °C. Then 7 grams of spheric particles of magnesium dichloride/alcohol adduct were added thereto, and the mixture was heated to 40 °C over 5 hours, and held at 40 °C for 0.5 hours, and then mother liquid was filtered off. Next, 100 ml of TiCl₄ and an amount of internal electron donor compound (molar ratio of the internal electron donor compound to magnesium compound was controlled at 1/8) were added to the reactor, the mixture was heated to 100°C and held at that temperature for 2 hours, and then mother liquid was filtered off. Additional 50 ml of hexane and 50 ml of TiCl₄ were added to the reactor, the content was heated to 80 °C and held at that temperature for 0.5 hour, and then mother liquid was filtered off. Then 100ml of TiCl₄ was added to the reactor, the content was heated to 120°C and held at that temperature for 0.5 hour, and then mother liquid was filtered off. Residual solid was washed with hexane at 60 °C for 5 times with the amount of hexane used being 60ml at each times. Finally, the solid was dried at 45 °C under nitrogen atmosphere and under reduced pressure to give a solid catalyst component.

### General procedure of propylene polymerization:

At room temperature and under nitrogen atmosphere, to a 5L autoclave, which had been purged with propylene gas at 70 °C for 1 hour, were charged with 5 ml of 0.5 M solution of triethyl aluminum in hexane, 1 ml of 0.1 M solution of cyclohexyl-methyl-dimethoxy-silane (CHMMS) in hexane, and 8.5 mg of solid spheric catalyst component in 10 ml of hexane. Then 1.5 L (standard volume) of hydrogen gas and 1.5 Kg of liquid propylene were added into the autoclave. The reactor was sealed and then heated to 70°C over 5 minutes with stirring. The polymerization was performed at 70°C for 2 hours. After stopping the stirrer, the unreacted propylene was removed, and the reaction mixture was cooled to room temperature. Polymer was removed from the autoclave and weighed to calculate the activity of the catalyst. Isotacticity of the polymer was measures by boiling heptane extraction method.

### Example 1

Particles of magnesium dichloride/alcohol adduct were prepared as follows.

### (1) Preparation of magnesium dichloride/alcohol adduct melt:

In a 150L reactor equipped with a stirrer, 10kg of anhydrous magnesium dichloride and 12.6kg of ethanol were added to 60L of white oil having a viscosity of 30 cps at 20°C, and the mixture was allowed to react at 125°C for 2 hours. Then the obtained mixture of molten magnesium dichloride/alcohol adduct and white oil was transferred into 120L of methyl silicone oil that was preheated to 125°C and had a viscosity of 300 cps at 20°C, and the mixture was stirred at a stirring speed of 200 rpm for 20 minutes.

### (2) Dispersion:

The above mixture entered a high-gravity rotary bed (as depicted in Figure 1) via an inlet 1, and was uniformly sprayed via a static liquid distributor 2, which was located at the center of the rotator, onto the inside edge of packing 3 rotating at a high speed. After the feed stream was sheared and dispersed by the packing that rotated at a high speed, the magnesium dichloride/alcohol adduct melt was suspended in a form of fine liquid droplets in the inert medium, and was discharged via an outlet 4. The rotation speed of the rotator was 1500 rpm, and the packing was a Sulzer packing having a wire diameter of 0.2 mm, a porosity of 97.8%, and a specific surface area of 852 m²/m³.

### (3) Solidifying by rapidly cooling:

The mixture discharged from the outlet 4 was introduced into 1200L of hexane, which was pre-cooled to -35°C, under stirring. The molten magnesium dichloride/alcohol adduct in the form of droplets was cooled and solidified to form spheric solid particles.

### (4) Filtering, washing and drying:

The solid particles were filtered out from the suspension obtained after rapidly cooling, washed with hexane at room temperature for five times with the amount of hexane used being 100L per times. The washed solid particles were dried under vacuum at a temperature of 30 to 50°C to give the spheric particles of magnesium dichloride/alcohol adduct.

The results are shown in Table 1.

### Example 2

The procedure as described in Example 1 was repeated, except that the rotation speed of the high-gravity rotary bed was regulated to 1200 rpm. The results are shown in Table 1.

### Example 3

The procedure as described in Example 1 was repeated, except that the rotation speed of the high-gravity rotary bed was regulated to 2000 rpm. The results are shown in Table 1.

### Example 4

The procedure as described in Example 1 was repeated, except that the rotation speed of the high-gravity rotary bed was regulated to 2500 rpm. The results are shown in Table 1.

### Example 5

The procedure as described in Example 1 was repeated, except that the amount of ethanol was changed to 13.6kg. The results are shown in Table 1.

### Example 6

The procedure as described in Example 1 was repeated, except that the amount of ethanol was changed to 14.6kg. The results are shown in Table 1.

### Example 7

The procedure as described in Example 3 was repeated, except that the amount of ethanol was changed to 14.6kg. The results are shown in Table 1.

### Example 8

The procedure as described in Example 4 was repeated, except that the amount of ethanol was changed to 14.6kg. The results are shown in Table 1.

### Comparative Example 1

Particles of magnesium dichloride/alcohol adduct were prepared according to the procedure as described in Example 1 of the Chinese Patent Application CN1330086A (high-speed stirring process), wherein the stirring speed in step (2) was 2000 rpm. The results are shown in Table 1.

### Examples 9-16

Catalyst components were prepared from the magnesium dichloride/alcohol adduct prepared in above Examples 1-8 according to the general procedure for preparing a spheric catalyst component as described above, and evaluated according to the general procedure of propylene polymerization as described above. The results are shown in Table 2.

### Comparative Example 2

Catalyst component was prepared from the magnesium dichloride/alcohol adduct prepared in above Comparative Example 1 according to the general procedure for preparing a spheric catalyst component as described above, and evaluated according to the general procedure of propylene polymerization as described above. The results are shown in Table 2.

**Table 1**

| Ex. No. | Rotation speed of rotary bed (rpm) | EtOH/MgCl₂ (mol/mol) | D(10) (µm) | D(50) (µm) | D(90) (µm) | span |
|---|---|---|---|---|---|---|
| 1 | 1500 | 2.6 | 18 | 33 | 50 | 0.97 |
| 2 | 1200 | 2.6 | 21 | 42 | 64 | 1.02 |
| 3 | 2000 | 2.6 | 17 | 30 | 46 | 0.97 |
| 4 | 2500 | 2.6 | 14 | 26 | 41 | 1.04 |
| 5 | 1500 | 2.8 | 20 | 34 | 50 | 0.88 |
| 6 | 1500 | 3.0 | 19 | 32 | 47 | 0.87 |
| 7 | 2000 | 3.0 | 16 | 28 | 42 | 0.93 |
| 8 | 2500 | 3.0 | 16 | 25 | 38 | 0.88 |
| Comp. Ex. 1 | ------- | 2.6 | 23 | 50 | 85 | 1.24 |

| | | | | | | |
|---|---|---|---|---|---|---|
| Notation: span=(D(90)-D(10))/D(50) | | | | | | |

**Table 2**

| Ex. No. | Ex. No. For obtaining the adduct | Internal Electron Donor Compound | Catalyst Component | | Activity kgPP/gCat | Isotacticity of Polymer wt% | Bulk Density of Polymer g/ml |
|---|---|---|---|---|---|---|---|
| | | | Specific Surface Area m²/g | Pore Volume ml/g | | | |
| 9 | 1 | DNBP | -- | -- | 75 | 98.5 | 0.50 |
| 10. | 2 | DNBP | -- | -- | 74 | 98.3 | 0.49 |
| 11 | 3 | DNBP | 283.6 | 0.31 | 76 | 98.4 | 0.50 |
| 12 | 4 | DNBP | -- | -- | 75 | 98.3 | 0.50 |
| 13 | 5 | DNBP | -- | -- | 77 | 98.5 | 0.51 |
| 14 | 6 | DNBP | -- | -- | 79 | 98.7 | 0.49 |
| 15 | 7 | DNBP | 301.7 | 0.35 | 80 | 98.4 | 0.50 |
| 16 | 8 | DNBP | | | 79 | 98.5 | 0.50 |
| Comp. Ex. 2 | Comp. Ex. 1 | DNBP | | | 63 | 98.0 | 0.46 |

It can be seen from the data shown in Table 2 that the catalysts according to the invention exhibit higher polymerization activity and higher stereoelectivity, and give polymers having better morphology and higher bulk density, compared with the catalyst using magnesium dichloride/alcohol adduct carrier which is prepared by high-speed stirring process known in the art.

## Claims

1. A spheric catalyst component for olefin polymerization, comprising at least one titanium compound and optionally at least one electron donor compound supported on an active magnesium halide spheric carrier, wherein the active magnesium halide spheric carrier is solid particles obtained by dispersing a melt of a magnesium halide/alcohol adduct by rotation under high-gravity field.

2. The spheric catalyst component according to claim 1, wherein the active magnesium halide spheric carrier has an mean particle diameter, D50, of from 15 to 90 microns, and a particle size distribution index, (D90-D10)/D50, of less than or equal to 1.5.

3. The spheric catalyst component according to claim 1 or 2, wherein the active magnesium halide spheric carrier is prepared by a process comprising the steps of:
(i) in an inert liquid medium, contacting a magnesium halide with an alcohol to prepare a melt of a magnesium halide/alcohol adduct;
(ii) dispersing the mixture of the inert liquid medium and the melt of the magnesium halide/alcohol adduct prepared in step (i) by rotation under high-gravity field to obtain a dispersion of the melt of the magnesium halide/alcohol adduct; and
(iii) cooling the dispersion of the melt prepared in step (ii) to form particles of the magnesium halide/alcohol adduct.

4. The spheric catalyst component according to any one of claims 1-3, wherein said magnesium halide is magnesium dichloride.

5. The spheric catalyst component according to any one of claims 1-4, wherein said alcohol is at least one selected from the group consisting of methanol, ethanol, propanol, iso-propanol, n-butanol, iso-butanol, iso-pentanol, n-octanol, 2-ethyl-hexanol, ethylene glycol, propylene glycol, chloroethanol and trichloroethanol.

6. The spheric catalyst component according to claim 3, wherein said inert liquid medium is an aliphatic hydrocarbon or an organic silicon compound or a mixture thereof.

7. The spheric catalyst component according to claim 3, wherein the step (ii) is carried out in a high-gravity rotary bed operated at a rotation speed of from 100 to 3000 rpm.

8. The spheric catalyst component according to claim 7, wherein the high-gravity rotary bed is packed with a corrugated gauze packing.

9. The spheric catalyst component according to any one of claims 1-8, wherein the titanium compound is represented by formula Ti(OR³)ₙXₘ, in which R³(s) is/are independently a hydrocarbyl having from 1 to 20 carbon atoms, preferably an alkyl having from 1 to 20 carbon atoms; X(s) is/are a halogen, independently selected from the group consisting of F, Cl, Br, I, and mixtures thereof; n is an integer of from 0 to 4, m is an integer of from 0 to 4, and the sum of n and m is 3 or 4.

10. A spheric catalyst component for olefin polymerization, which comprises at least one titanium compound and optionally at least one electron donor compound supported on an active magnesium halide spheric carrier, and when used in olefin polymerization, gives a powder polymer having a bulk density of greater than or equal to 0.48 g/cm³.

11. The spheric catalyst component according to claim 10, wherein said magnesium halide is magnesium dichloride.

12. The spheric catalyst component according to claim 10 or 11, wherein the titanium compound is represented by formula Ti(OR³)ₙXₘ, in which R³(s) is/are independently a hydrocarbyl having from 1 to 20 carbon atoms, preferably an alkyl having from 1 to 20 carbon atoms; X(s) is/are a halogen, independently selected from the group consisting of F, Cl, Br, I, and mixtures thereof; n is an integer of from 0 to 4, m is an integer of from 0 to 4, and the sum of n and m is 3 or 4.

13. A catalyst for the polymerization of olefin CH₂=CHR, in which R is H or a C₁-C₁₂ alkyl or aryl, said catalyst comprising a reaction product of:
a) the spheric catalyst component according to any one of claims 1-12;
b) an alkyl aluminum compound; and
c) optionally, an external electron donor compound.

14. A process for polymerizing olefin CH₂=CHR, in which R is H or a C₁-C₁₂ alkyl or aryl, comprising contacting the olefin and optional comonomer(s) with the catalyst according to claim 13 under polymerization conditions.
